# EUROPÄISCHE PATENTSCHRIFT

(11) **EP 1 330 324 B1**
(45) Veröffentlichungstag und Bekanntmachung des Hinweises auf die Patenterteilung: **15.12.2004**
(21) Anmeldenummer: 01992624.5
(22) Anmeldetag: 26.10.2001
(51) Int. Cl.: B23D 31/04, B23D 25/14

(54) **KOMPAKTE KREISMESSERSCHERE**
COMPACT ROTARY SHEARS
ELEMENT DE CISAILLAGE A LAME CIRCULAIRE COMPACT

(30) Priorität: 04.11.2000 DE 10054761
(43) Veröffentlichungstag der Anmeldung: 30.07.2003
(73) Patentinhaber: SMS Demag Aktiengesellschaft, 40237 Düsseldorf (DE)
(72) Erfinder: GRAFE, Horst, 57271 Hilchenbach (DE); BEUTER, Matthias, 57319 Bad Berleburg (DE)
(74) Vertreter: Valentin, Ekkehard
(86) Internationale Anmeldenummer: PCT/EP2001/012377
(87) Internationale Veröffentlichungsnummer: WO 2002/036294

(56) Entgegenhaltungen:
- DE-A- 1 552 710
- DE-A- 3 007 931
- DE-A- 3 741 219
- DE-A- 4 108 717
- FR-A- 1 417 155
- GB-A- 973 196
- US-A- 4 627 320

## Beschreibung

Die Erfindung betrifft eine Vorrichtung zum beidseitigen Besäumen von Walzbändern und/oder Blechen mit einer Doppelbesäumschere und einer Saumstreifenzerteilschere, die jeweils einer Besäumschere zugeordnet ist und bezogen auf die Durchlauflinie des zu besäumenden Gutes unterhalb der Besäumschere versetzt angeordnet ist, sowie mit je ein Treiberrollenpaar an der Einlaufseite und Auslaufseite der Doppelbesäumschere aufweist.

Derartige Vorrichtungen sind aus der Praxis bekannt. Die aus der Praxis bekannten Vorrichtungen weisen Besäumscheren, Saumstreifenzerteilscheren und Treiber an der Ein- und Auslaufseite der Besäumschere zum Führen und Transportieren von Blechen oder Walzbändern auf. Alle vier genannten Funktionsgruppen sind eigenständige Maschinen. Die wesentlichen Nachteile der getrennten Funktionsgruppen bestehen z.B. darin, dass ein großer Platzbedarf benötigt wird und, dass zwischen den ein- und auslaufseitigen Treibern ein relativ großer Abstand vorhanden ist, wodurch ein Handling kurzer Bleche erschwert wird. Durch den relativ großen Abstand der Besäumschere zur Saumstreifenzerteilschere ergibt sich eine störanfällige Saumstreifenführung.

Das Dokument DE 37 41 219 A1 beschreibt eine Besäumanlage zum Besäumen der Längskanten vom laufenden Walzband, die eine rotierende Besäumschere und eine rotierende Schrott- bzw. Saumstreifenteilschere aufweist, wobei beide Funktionsgruppen zu einer Kompaktbaueinheit zusammengefaßt sind. Getrennt von dieser Kompaktbaueinheit sind die Treiberrollen angeordnet. Nachteilig bei der Ausgestaltung der Vorrichtung gemäß der DE 37 41 219 A1 ist, dass ein Handling kurzer Bleche erschwert wird.

Ein Verfahren und eine Anlage zum Besäumen von Blechen mittels einer Langmesserschere, insbesondere einer Bogenmesserschere, ist aus der DE 30 07 931 A1 bekannt. Hierbei ist die Anlage so ausgebildet, dass die Langmesserbesäumschere und die Saumstreifenzerteilschere für unterschiedliche Hubzahlverhältnisse miteinander koppelbar und dabei die Vorschubschritte der Treiber mit der Hubzahl der Saumstreifenzerteilschere synchronisierbar sind.

Die Übertragung der Hubbewegungen in die Rotationsbewegung der Treiber ist aber kompliziert und nur mit großem Aufwand durchführbar.

Der Erfindung liegt die Aufgabe zugrunde, die vorgenannten Nachteile aufzuheben, und gleichzeitig eine Vorrichtung zur Verfügung zu stellen, die es erlaubt, relativ kurze Bleche mit der Vorrichtung zu bearbeiten.

Zur Lösung der Aufgabe wird vorgeschlagen, dass jede Besäumschere, jede Saumstreifenzerteilschere sowie jedes Treiberrollenpaar an mindestens einem Grundkörper zusammengefasst sind, und ein Grundkörper ortsfest sowie der zweite Grundkörper zur Einstellung auf unterschiedliche Besäumbreiten des Walzbandes und/oder Bleches verfahrbar und feststellbar angeordnet ist.

Durch die Zusammenfassung der vier Funktionsgruppen an einem Grundkörper läßt sich eine kompakte Baueinheit herstellen, die zudem einen kleinen Platzbedarf aufweist. Durch den kleinen Abstand zwischen den ein- und auslaufseitigen Treiberrollenpaaren lassen sich auch kurze Bleche bearbeiten. Der geringe Abstand zwischen der Besäumschere und der Saumstreifenzerteilschere ermöglicht eine sichere Saumstreifenführung.

Vorteilhafte Ausgestaltungen der erfindungsgemäßen Vorrichtung sind in den Unteransprüchen offenbart.

Ein Ausführungsbeispiel der Erfindung wird im folgenden beschrieben. Es zeigen:
- Figur 1: eine Aufsicht der erfindungsgemäßen Vorrichtung zum beidseitigen Besäumen von Walzbändern und/oder Blechen mit einer Doppelbesäumschere, Saumstreifenzerteilscheren sowie den einlaufseitigen und auslaufseitigen Treiberrollenpaaren,
- Figur 2: eine Seitenansicht der erfindungsgemaßen Vorrichtung,
- Figur 3: eine schematische Ansichtsdarstellung einer Seite der erfindungsgemäßen Vorrichtung als Vergrößerung.

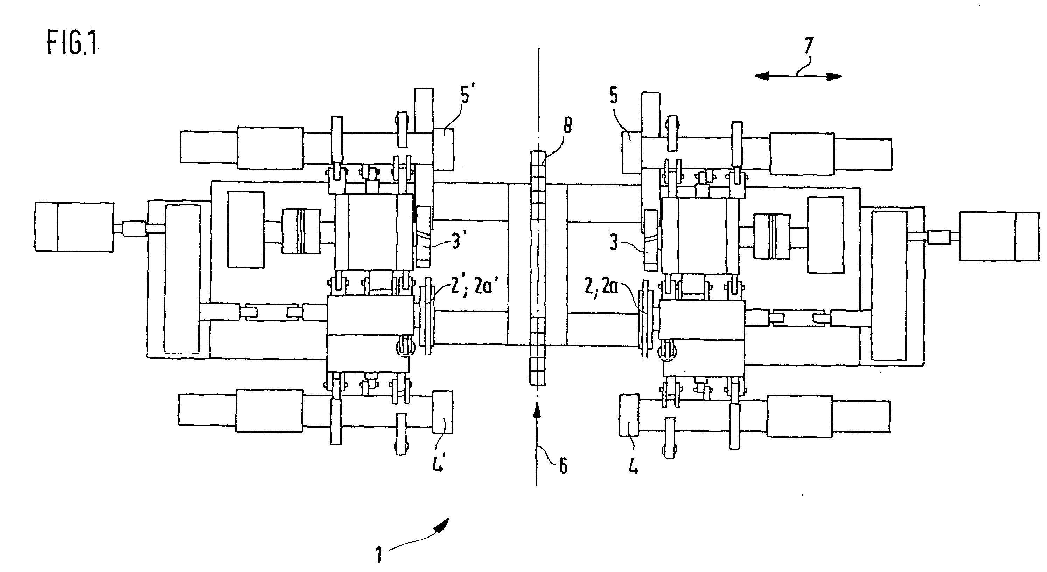

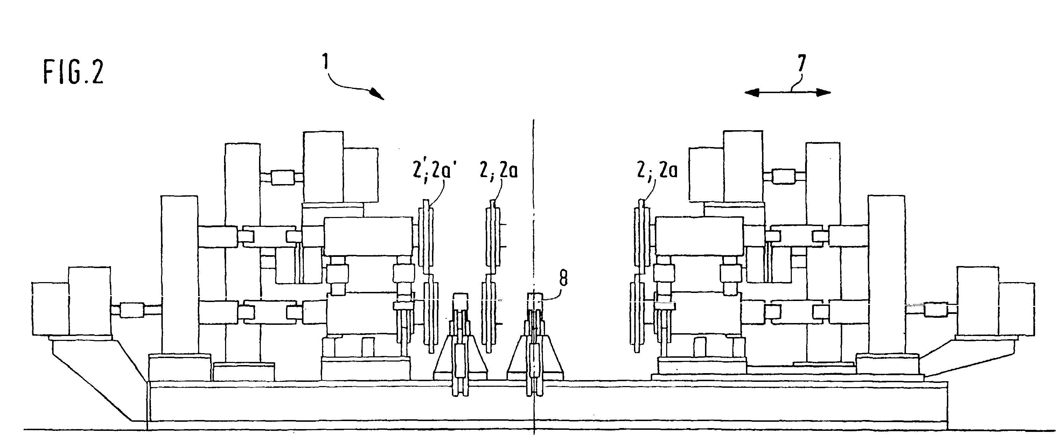

In den Fig. 1 und 2 der Zeichnung ist eine Aufsicht bzw. eine Seitenansicht einer Vorrichtung 1, wie sie für das beidseitige Besäumen von Walzbändern oder Blechen zum Einsatz gelangt, dargestellt. Eine Seite der Vorrichtung 1 ist ortsfest, während die andere Seite, dargestellt durch den Doppelpfeil 7, horizontal beweglich ist, wodurch sich eine Anpassung an die Breite des zu besäumenden Gutes erreichen läßt.

Die Durchlaufrichtung des zu besäumenden Gutes ist mit dem Pfeil 6 dargestellt. Das einlaufseitige Treiberrollenpaar 4,4' führt das zu besäumende Gut der Kreismesserschere 2a,2a' zu, welche einen Saum vom zu besäumenden Gut abtrennt, der unmittelbar der Saumstreifenzerteilschere 3,3' zugeführt wird. Die Saumstreifenzerteilschere 3,3' zerteilt den abgetrennten Saum in chargierfähige Schrottstücke. Das auslaufseitige Treiberrollenpaar 5,5' kommt nach dem Besäumschnitt zur Wirkung, d.h., das auslaufseitige Treiberrollenpaar 5,5' wirkt synchron mit dem einlaufseitigen Treiberpaar 4,4' auf das zu besäumende Gut ein.

Zur mittigen Abstützung des zu besäumenden Gutes sind Stützrollen 8 vorgesehen. Diese lassen sich entsprechend der Breite des zu besäumenden Gutes horizontal verschieben und verhindern eine Bauchbildung des Walzbandes.

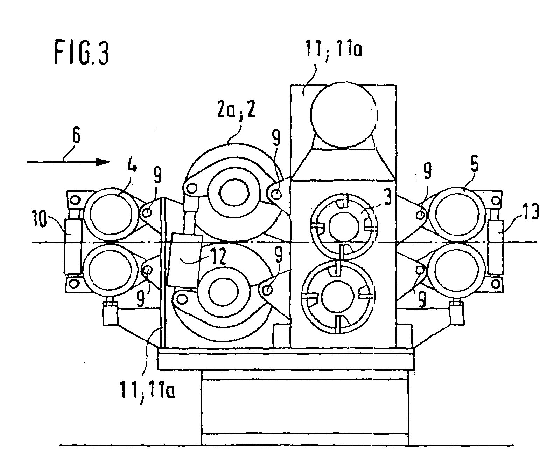

In Fig. 3 der Zeichnung ist die Durchlauflinie des Walzbandes strichpunktiert dargestellt. Die Durchlaufrichtung ist durch den Pfeil 6 erkennbar.

Das einlaufseitige Treiberrollenpaar 4 ist über Schwenkpunkte 9 mit dem Grundrahmen 11 verbunden. Zur Anpassung an unterschiedliche Walzbanddikken läßt sich der Spalt zwischen der unterseitigen Treiberrolle und der oberseitigen Treiberrolle über einen Hydraulikzylinder 10 verändern. Hierdurch wird gewährleistet, dass das Treiberrollenpaar 4 den nötigen Vorschub ohne Schlupf ermöglicht. Durch das Treiberrollenpaar 4 wird das Walzband der Kreismesserschere 2a zugeführt. Die Kreismesserschere 2a ist jeweils oberseitig und unterseitig über Schwenkpunkte 9 mit dem Grundrahmen 11 verbunden. Eine Anpassung an unterschiedliche Walzbanddicken läßt sich über einen Hydraulikzylinder 12 erreichen, der die Lage des oberseitigen Kreismessers entsprechend verändert.

Der abgetrennte Saum wird unmittelbar der Saumstreifenzerteilschere 3 zugeführt.

Die auslaufseitigen Treiberrollen 5 sind unterseitig und oberseitig über Schwenkpunkte 9 an dem Grundrahmen 11 montiert. Eine synchrone Anpassung an die Walzbanddicke, wie sie einlaufseitig erfolgt, erfolgt auch hier über einen Hydraulikzylinder 13, der unmittelbar auf das auslaufseitige Treiberrollenpaar 5 einwirkt.

## Patentansprüche

1. Vorrichtung zum beidseitigen Besäumen von Walzbändern und/oder Blechen mit einer Doppelbesäumschere und einer Saumstreifenzerteilschere, die jeweils einer Besäumschere zugeordnet ist und bezogen auf die Durchlauflinie des zu besäumenden Gutes unterhalb der Besäumschere versetzt angeordnet ist, sowie mit je einem Treiberrollenpaar an der Einlaufseite und Auslaufseite der Doppelbesäumschere,
**dadurch gekennzeichnet,**
**dass** jede Besäumschere (2,2'), jede Saumstreifenzerteilschere (3.3') sowie jedes Treiberrollenpaar (4,4';5,5') an mindestens einem Grundkörper (11,11') zusammengefasst sind, und ein Grundkörper (11,11') ortsfest sowie der zweite Grundkörper (11,11') zur Einstellung auf unterschiedliche Besäumbreiten des Walzbandes und/oder Bleches verfahrbar und feststellbar angeordnet ist.

2. Vorrichtung nach Anspruch 1,
**dadurch gekennzeichnet,**
**dass** die Besäumschere (2,2') als Kreismesserschere (2a,2a') ausgebildet ist.

3. Vorrichtung nach Anspruch 1 und 2,
**dadurch gekennzeichnet,**
**dass** der Grundkörper (11,11') als offener Rahmen( 11a, 11a') ausgebildet ist.

4. Vorrichtung nach einem der Ansprüche 1 bis 3,
**dadurch gekennzeichnet,**
**dass** die Besäumschere (2,2') und die Treiberrollenpaare (4,4';5,5') an Schwenkpunkten (9,9') bewegbar an dem Rahmen (11a,11a') anbringbar sind.

5. Vorrichtung nach einem der Ansprüche 1 bis 4,
**dadurch gekennzeichnet,**
**dass** die an dem Rahmen (11a,11a') bewegbar angebrachten Treiberrollenpaare (4,4';5,5') und Kreismesserschere (2a,2a') über Hydraulikzylinder (10,10'; 12,12'; 13,13') an die Dicke des zu besäumenden Gutes stufenlos anpaßbar sind.

6. Vorrichtung nach einem der Ansprüche 1 bis 5,
**dadurch gekennzeichnet,**
**dass** die Kreismesserschere (2a,2a'), die Treiberrollenpaare (4,4';5,5') sowie die Saumstreifenzerteilschere (3,3') antreibbar sind, und die Antriebe zueinander synchronisierbar sind.

7. Vorrichtung nach einem der Ansprüche 1 bis 5,
**dadurch gekennzeichnet,**
**dass** die Kreismesserschere (2a,2a') antreibbar ist und die Treiberrollenpaare (4,4';5,5') sowie die Saumstreifenzerteitschere (3,3') durch mechanische Übersetzungsgetriebe an den Antrieb der Kreismesserschere (2a,2a') koppelbar sind.

## Claims

1. Device for trimming rolled strips and/or metal plates at both sides by a double trimming shears and a trimmed-strip cutting-up shears, which is associated with each trimming shears and is arranged to be offset with respect to the transit line of the material, which is to be trimmed, below the trimming shears, as well as with a respective drive roller pair at the inlet side and outlet side of the double trimming shears, **characterised in that** each trimming shears (2, 2'), each trimmed strip cutting-up shears (3, 3') and each drive roller pair (4, 4'; 5, 5') are combined into at least one base body (11, 11'), and one base body (11, 11') is arranged in stationary position and the second base body (11, 11') is arranged to be movable and fixable for setting to different trimming widths of the rolled strip and/or metal plate.

2. Device according to claim 1, **characterised in that** the trimming shears (2, 2') is constructed as a circular knife shears (2a, 2a').

3. Device according to claim 1 and 2, **characterised in that** the base body (11, 11') is constructed as an open frame (11a, 11a').

4. Device according to one of claims 1 to 3, **characterised in that** the trimming shears (2, 2') and the drive roller pairs (4, 4'; 5, 5') can be mounted at pivot points (9, 9') to be movable on the frame (11a, 11a').

5. Device according to one of claims 1 to 4, **characterised in that** the drive roller pairs (4, 4'; 5, 5') movably mounted at the frame (11a, 11a') and circular knife shears (2a, 2a') are steplessly adaptible to the thickness of the material, which is to be trimmed, by way of hydraulic cylinders (10, 10'; 12, 12'; 13, 13').

6. Device according to one of claims 1 to 5, **characterised in that** the circular knife shears (2a, 2a'), the drive roller pairs (4, 4'; 5, 5') and the trimmed-strip cutting-up shears (3, 3') are drivable and the drives can be synchronised relative to one another.

7. Device according to one of claims 1 to 5, **characterised in that** the circular knife shears (2a, 2a') are drivable and the drive roller pairs (4, 4'; 5, 5') and the trimmed-strip cutting-up shears (3, 3') can be coupled by a mechanical speed reduction transmission to the drive of the circular knife shears (2a, 2a').

## Revendications

1. Dispositif pour rogner des deux côtés des bandes laminées et/ou des tôles à l'aide d'un élément de cisaillage double et d'un élément de découpage de bandes de bordure, lequel est coordonné respectivement afin de former un élément de cisaillage et est disposé parallèlement à la ligne de découpe du matériau qui doit être rogné en décalage en dessous de l'élément de cisaillage, l'élément de cisaillage double étant pourvu sur son côté entrant et son côté sortant d'une paire de rouleaux d'entraînement, **caractérisé en ce que**
chaque élément de cisaillage (2,2), chaque élément de découpe d'une bande de bordure (3,3') ainsi que chaque paire de rouleaux d'entraînement (4,4' ; 5,5') sont assemblés de manière à former au moins un châssis principal (11,11') et un dit châssis (11,11') est conçu conjointement avec le deuxième châssis (11,11') pour ajuster à des largeurs de cisaillage différentes les bandes laminées et/ou les tôles de manière opérationnelle et vérifiable.

2. Dispositif selon la revendication 1, **caractérisé en ce que** l'élément de cisaillage (2,2') est conçu sus la forme d'un élément de cisaillage à lame circulaire (2a, 2a').

3. Dispositif selon la revendication 1 et 2, **caractérisé en ce que** le châssis principal (11,11') est conçu sous la forme d'un châssis ouvert (11a, 11a').

4. Dispositif selon une des revendications 1 à 3, **caractérisé en ce que** l'élément de cisaillage (2,2') et les paires de rouleaux d'entraînement (4,4' ;5,5') peuvent être déplacés vers des points de pivotement (9,9') mobiles disposés au niveau du châssis (11a, 11 a').

5. Dispositif selon une des revendications 1 à 4, **caractérisé en ce que** les paires de rouleaux d'entraînement (4,4' ; 5,5') et l'élément de cisaillage à lame circulaire (2a, 2a') qui sont déplacés vers le châssis (11a, 11a') sont réglés progressivement par des cylindres hydrauliques (10,10';12,12'; 13,13') de manière à s'adapter à l'épaisseur du matériau qui doit être rogné.

6. Dispositif selon une des revendications 1 à 5, **caractérisé en ce que** l'élément de cisaillage à lame circulaire (2a, 2a'), les paires de rouleaux d'entraînement (4,4' ;5, 5') ainsi que l'élément de découpage de bandes de bordure (3,3') peuvent être commandés et synchronisés les uns par rapport aux autres.

7. Dispositif selon une des revendications 1 à 5, **caractérisé en ce que** l'élément de cisaillage à lame circulaire (2a, 2a') peut être commandé et que les paires de rouleaux d'entraînement (4,4' ; 5,5') ainsi que l'élément de découpage de bandes de bordure (3,3') sont synchronisés à l'actionnement de l'élément de cisaillage à lame circulaire (2a, 2a') par un train d'engrenages mécanique.
